# EUROPEAN PATENT SPECIFICATION

(11) **EP 2 280 348 B1**
(45) Date of publication and mention of the grant of the patent: **21.09.2011**
(21) Application number: 10165410.1
(22) Date of filing: 09.06.2010
(51) Int. Cl.: G06F 11/14

(54) **Method and system for saving operational state of running applications when unexpected shutdown events occur**
Verfahren und System zum Speichern des Betriebszustands von laufenden Anwendungen bei Auftreten nicht erwarteter Abschaltereignisse
Procédé et système pour enregistrer l'état opérationnel d'applications exécutées en cas de survenue d'événements d'arrêt

(30) Priority: 27.07.2009 EP 09166433
(43) Date of publication of application: 02.02.2011
(73) Proprietor: International Business Machines Corporation, Armonk, NY 10504 (US)
(72) Inventor: Di Domenico, Daniela, 00144, Roma (IT); Tripodi, Viviana, 00144, Roma (IT)
(74) Representative: Bell, Mark

(56) References cited:
- US-A1- 2002 144 180
- US-A1- 2002 169 795
- US-A1- 2007 162 779

## Description

### Technical Field

The present invention relates to the field of data processing systems and more particularly to a method and system for saving the operational state of running applications in order to avoid possible loss of data when an unexpected shutdown occurs.

### Background

It could happen that an event forces a system reboot and that the user is not able to save the work in progress (e.g. he is away from computer), resulting in a high probability that the work in progress will be lost. Currently available prior art tools do not solve the problem of saving the application status immediately before the reboot is invoked. Even if the user is enabled to continue to use the same application, he might have lost his work if not manually saved before reboot.
On some Operating Systems (e.g. Windows of Microsoft) it is provided the hibernate function which does a snapshot of the system. It freezes the system until it is restarted and it does not allow changing registry keys. If the invoked shutdown is unexpected, this hibernate function is of course of little help. Furthermore, the freezing of the system would be incompatible with the necessity of changing registry keys when, for example a forced reboot is invoked by the installation of a patch.

Another system known in the art is the Advanced App Saver 1.0 of Asynchrony Solutions. It is a system (available for some Windows version e.g. Windows 95, 98, ME or 2000) for saving currently running application when a shutdown occurs. If a user leaves a Windows Explorer window opened when a shut down occurs on his Windows computer, the next time the operating system is started, that window will reappear. Unfortunately, the same is not true for any other windows which were open at the time the PC was shut down. The main purpose of App Saver is to extend the same functionality to other applications. It does this by configuring Windows to run the applications which were open the last time Windows was shut down when it next starts up. When Windows is restarted, all applications, which were running before the last shutdown, are restarted. However this application is only about restarting and it does not save the application status before the shutdown is invoked. Then the user can continue to use the same application but he might loose his work if not manually saved before reboot.
The patent application US 2007/0162779 describes how to save an application context and restore it in case of application shutdowns. However, in case of unexpected shutdown of a system running such applications, there is no warranty that the application contexts will be saved in time for preparing a correct restoring.
It is an object of the present invention to alleviate the drawbacks of the prior art, by providing a tool which saves the operational state and relevant data when an unexpected shutdown occurs.

### Summary of the invention

The invention is defined by the independent claims.

According to the invention, there is provided a method in a data processing system for saving status of at least one software application which is running on said data processing system when an unexpected event forces a closing of running applications, the method including the steps of: monitoring the data processing system activities for detecting an event indicative of a forthcoming system shutdown action, the system shutdown action including a command which forces the closing of running applications; responsive to a detection of said event, suspending the execution of said shutdown action; recording the current status of the at least one running software application; storing an indication that the at least one running software application has recorded current status for later reuse; restoring the execution of said shutdown action.
Another aspect of the invention provides a computer program for performing the method.
A further aspect of the invention provides a corresponding system.
The method and the tool according to the present invention provides a system which saves the operational state of running applications, overcoming the limitations of the prior art systems. In a preferred embodiment of the present invention, after the reboot the tool automatically restarts applications to their most recently saved operational status.

### Brief description of the drawings

An embodiment of the invention is herein described, by way of example, with reference to the accompanying figures in which:
Figure 1 is a schematic representation of a system implementing a preferred embodiment of the present invention;
Figure 2 is a block diagram of a computer system adapted to perform the method of a preferred embodiment of the present invention;
Figure 3 is a schematic diagram of a preferred embodiment of the present invention; and
Figure 4 is a flow chart of the method of the preferred embodiment.

### Detailed description of the invention

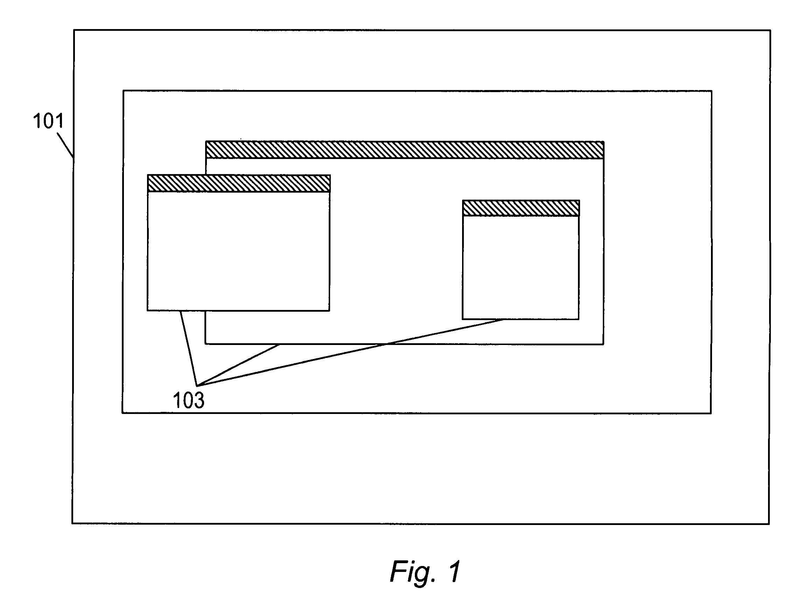

With reference in particular to Figure 1, a system embodying the present invention is schematically represented. On a desktop 101 of a data processing system (e.g. a personal computer), a plurality of windows 103 are represented according to the well known architecture of the window-based operating systems. Each window is related to at least one application and provides the user interface for such application. Those skilled in the art will appreciate that this is only an example of a suitable Operating System which can implement the present invention; however any Operating System could be used instead. When an unexpected event causing the system shutdown occurs, the method according to a preferred embodiment of the present invention saves the current status of the applications associated to windows 103, to avoid that any un-saved work or data could be lost during shutdown and to enable the user to restart the work with the same conditions as before the unexpected event. The current status of an application inlcudes all information about its operational state (e.g. the fact a window was open and displayed in a precise position on the display, having focus or not, overlapping other windows) and any kind of data which were not saved at the time the shutdown was invoked. In order to do that, a software tool, hereinafter called Saving Tool must be started at start up and be always active (e.g. as a daemon) to monitor the system and detect any possible occurrences of a shutdown request. When such a shutdown request is detected, the Saving Tool suspend the shutdown operations to allow the currently open applications (which were previously included in a list maintained by the Saving Tool) saving their current status, including any un-saved data.

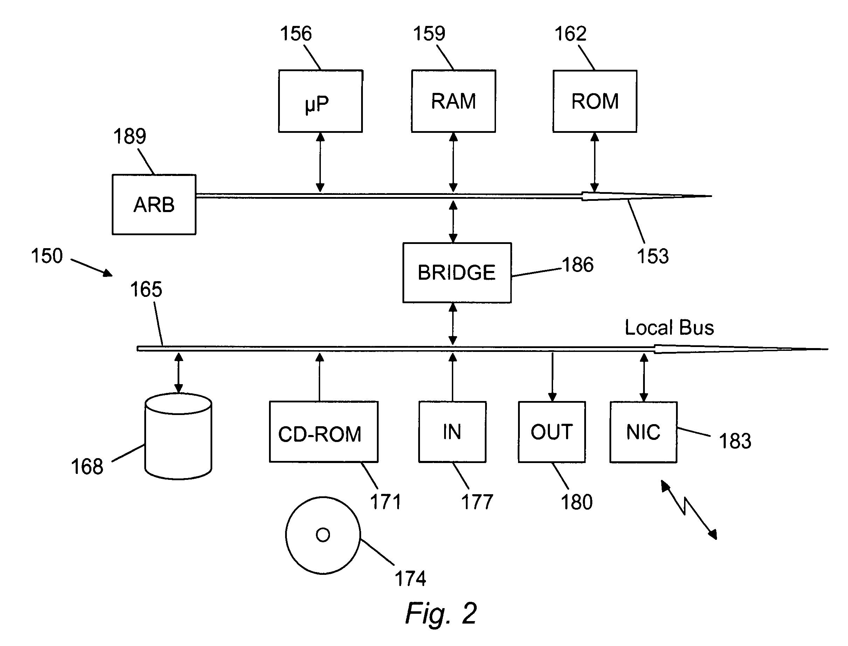

As shown in Figure 2, a generic computer of the system (e.g. personal computer, server, workstation) is denoted with 150. The computer 150 is formed by several units that are connected in parallel to a system bus 153. In detail, one or more microprocessors 156 control operation of the computer 150; a RAM 159 is directly used as a working memory by the microprocessors 156, and a ROM 162 stores basic code for a bootstrap of the computer 150. Peripheral units are clustered around a local bus 165 (by means of respective interfaces). Particularly, a mass memory consists of a hard-disk 168 and a drive 171 for reading CD-ROMs 174. Moreover, the computer 150 includes input devices 177 (for example, a keyboard and a mouse), and output devices 180 (for example, a monitor and a printer). A Network Interface Card 183 is used to connect the computer 150 to the network. A bridge unit 186 interfaces the system bus 153 with the local bus 165. Each microprocessor 156 and the bridge unit 186 can operate as master agents requesting an access to the system bus 153 for transmitting information. An arbiter 189 manages the granting of the access with mutual exclusion to the system bus 153. Similar considerations apply if the system has a different topology, or it is based on other networks. Alternatively, the computers have a different structure, include equivalent units, or consist of other data processing entities (such as PDAs, mobile phones, and the like).

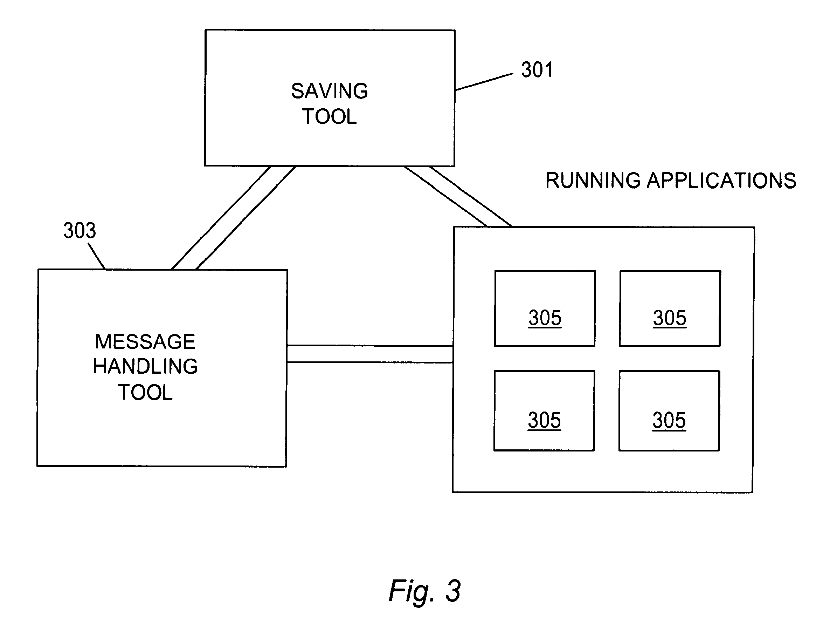

As shown in Fig.3, a preferred embodiment of the present invention provides a mechanism for preventing loss of current status of applications which are open at the time an unexpected shutdown (e.g. for a reboot) occurs. A software Saving Tool 301 is launched at the start up of the operating system. The present example uses Windows as Operating System (e.g. the APIs and commands follow Windows standards), without any intentions of limiting to this system the possible implementations of the present invention.
The Saving Tool is responsible for:
- detecting when a reboot is invoked;
- saving the current system state;
- saving any un-saved data for later restore;
- allowing the system to return to the state it was before the reboot.
In a preferred embodiment of the present invention, in order to perform the saving and recovery actions, the Saving Tool 301 needs to know how to save current status of the applications 305. A list of applications will be maintained by the Saving Tool 301 with all the details of each application. In this embodiment, only those application for which the detailed instructions have been provided to the Saving Tool 301 will be saved.
Also, the Saving Tool must become part of the system configuration by running the following steps:
- The Saving Tool is launched at the start up of the operating system.
- A reboot event issued by the operating system is detected. Each operating system manages a reboot event in a different mode: i.e. Windows uses the embedded tool named Message Handling 303 to send a specific message to all applications 305 up and running when a system reboot is invoked.
When the Saving Tool 301 starts, it calls the 'SetProcessShutdownParameters' API in order to save itself as the first process that receives the message, when a reboot is invoked. It is necessary in order to be sure that all applications 305 are still up and running when the message is received by the Saving Tool, otherwise it cannot do any actions on those applications which had been already closed. The operating system sends the message first to the Saving Tool, because it is the process with the highest priority.
- The Saving Tool calls an API to retrieve the list of all active applications.
The Saving Tool contains itself a list of applications that it can manage and the related actions to save/restore their state (that have been made known by the applications). For example, for saving Lotus Notes application, it could be a commands sequence like: Go to 'File', move the cursor to 'Save Windows State' and click on it. - The Saving Tool has been instructed in order to perform the actions needed to save the state of the applications that it can manage.
Note that the applications will not be closed: it is necessary in order to be sure that the embedded tool (i.e. Message Handling for Windows) finds the same applications up and running when a system reboot has been invoked, otherwise it can not know how many applications have been already closed and why.
As an alternative to the step above, where the saving actions are performed by the Saving Tool itself, it is possible that the applications or some of them are instrumented to perform their own saving actions
- The Saving Tool closes itself.
- The operating system sends the same message to other active applications.
- When all applications have been closed, the reboot can take place.
- The operating system starts up after the reboot.
The Saving Tool has been instrumented to save itself in the Start-up section in order to be sure that, when the user logs on after the reboot, it is automatically restarted.
- The operating system restarts first of all the Saving Tool.
- The Saving Tool automatically restarts the applications previously managed to their saved status by invoking the restore commands inserted in its list.
Note that the last step could be customisable in order to not automatically restart all applications and to allow the user to choose which applications should restart.

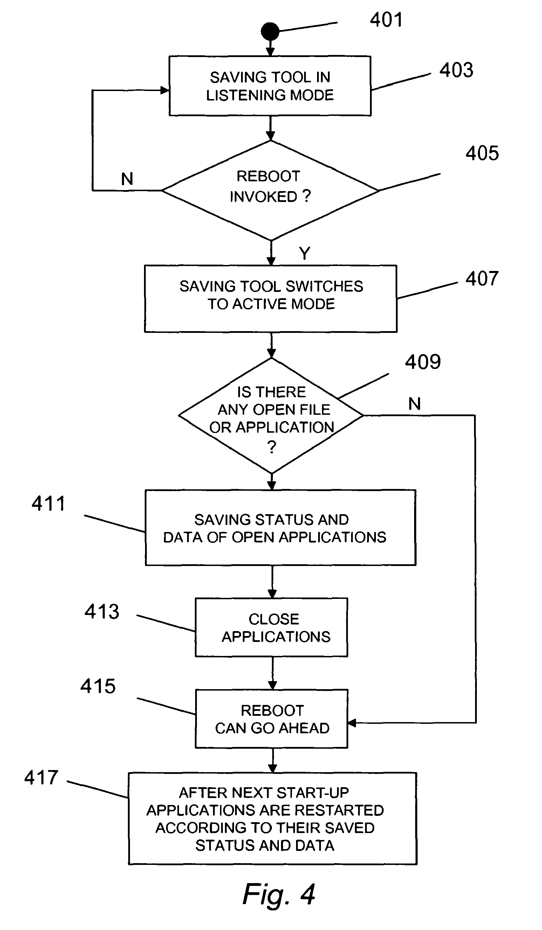

Referring to Figure 4, the steps of a method according to a preferred embodiment of the present invention are described. The process starts at 401 and goes to step 403 where the Saving Tool according to a preferred embodiment of the present invention is in Listening Mode, i.e. it constantly monitors the system to detect any possible invocation of a reboot (or a shutdown) as shown in step 405. As mentioned above in order to do that, it is necessary that the Saving Tool is loaded at startup and it must be the first process to receive the reboot message, e.g. from the Message Handling tool as explained above with reference to Fig. 3. If a reboot request is detected, the Saving Tool switches to Active Mode (step 407) and verifies if there is any active applications and open files (step 409). In case there are none, the reboot can take place and the control goes directly to step 415. Otherwise the reboot action is put on hold and the Saving Tool performs those operations needed to save current status, including un-saved data, of monitored applications before the reboot (step 411) as explained above. According to a preferred embodiment of the present invention as described in this example, only those application included in the list maintained by the Saving Tool and for which the Saving Tool knows how to operate can be saved. After applications have saved their status they can be closed (step 413) and the reboot (or shutdown) can go ahead (step 415). After the next start up, the Saving Tool according to a preferred embodiment of the present invention restarts all applications which were closed at step 413 restoring the status they had at the time the reboot was invoked. As mentioned above, the Saving Tool must be started as the first process when the system is bootstrapped. To ensure this, it is necessary that the Saving Tool is inserted in a list of software programs started at boot. For instance in Windows, through the following registry keys it is possible to manage programs to be started at system start-up:
HKEY_LOCAL_MACHINES\Software\Microsoft\Windows\CurrentVersion\ RunServicesOnce
HKEY_CURRENT_USER\Software\Microsoft\Windows\CurrentVersion\Ru nServicesOnce
HKEY_LOCAL_MACHINES\Software\Microsoft\Nindows\CurrentVersion\ RunServices
HKEY_CURRENT_USER\Software\Microsoft\Windows\CurrentVersion\Ru nServices
HKEY_LOCAL_MACHINES\Software\Microsoft\Windows\CurrentVersion\ RunOnce
HKEY_LOCAL_MACHINES\Software\Microsoft\Windows\CurrentVersion\ RunOnceEx
HKEY_LOCAL_MACHINES\Software\Microsoft\Windows\CurrentVersion\ Run registry key
HKEY_CURRENT_USER\Software\Microsoft\Windows\CurrentVersion\Ru n registry key
Inserting proper values in these registry keys it is possible to start the Saving Tool as the first process.

Alterations and modifications may be made to the above without departing from the scope of the claims.

For example, similar considerations apply if the computer has a different structure or includes equivalent units; in any case, it is possible to replace the computer with any code execution entity (such as a PDA, a mobile phone, and the like).
Similar considerations apply if the program (which may be used to implement each embodiment of the invention) is structured in a different way, or if additional modules or functions are provided; likewise, the memory structures may be of other types, or may be replaced with equivalent entities (not necessarily consisting of physical storage media). In any case, the program may take any form suitable to be used by or in connection with any data processing system, such as external or resident software, firmware, or microcode (either in object code or in source code). Moreover, the program may be provided on any computer-usable medium; the medium can be any element suitable to contain, store, communicate, propagate, or transfer the program. Examples of such medium are fixed disks (where the program can be pre-loaded), removable disks, tapes, cards, wires, fibers, wireless connections, networks, broadcast waves, and the like; for example, the medium may be of the electronic, magnetic, optical, electromagnetic, infrared, or semiconductor type.
In any case, the solution according to the present invention lends itself to be carried out with a hardware structure (for example, integrated in a chip of semiconductor material), or with a combination of software and hardware.

## Claims

1. A method in a data processing system (150) for saving status of at least one software application (305) which is running on said data processing system when an unexpected event forces a closing of running applications, the method including the steps of:
- at start up of the system, the first of a plurality of processes being executed is a process of a software tool (301) implementing the following steps of the method;
- maintaining a list of a plurality of software applications and for each application recording a set of predetermined actions to be performed for saving the current status;
- monitoring (405) the data processing system activities for detecting an event indicative of a forthcoming system shutdown action, the system shutdown action including a command which forces the closing of running applications;
- responsive to a detection of said event, suspending the execution of said shutdown action;
- performing (411) for each running application of the plurality of applications the corresponding predetermined set of actions;
- storing an indication that the at least one running software application has recorded current status for later reuse;
- restoring the execution of said shutdown action.

2. The method of claim 1 wherein the current status of a software application includes the software application operational state.

3. The method of any preceding claim wherein the current status of a software application includes any unsaved data of the software application.

4. The method of any preceding claim wherein the event indicative of a forthcoming event includes a reboot request issued by the operating system.

5. The method of any one of claims 1 to 4 wherein the list of the plurality of applications and the corresponding set of predetermined actions is maintained by the software tool.

6. The method of any one of claims 1 to 5 further comprising the steps of:
- at start up of the system checking if any indication has been stored in the system that one or more applications have recorded their current status before a previous shutdown event; and
- responsive to any recorded status being found, restarting (417) the corresponding applications according to the recorded status.

7. The method of claim 6, wherein the restarting step is conditioned to a user approval.

8. A computer program for performing the method steps of any preceding claim when the computer program is executed on a data processing system.

9. A computer program product including computer readable means embodying the computer program of claim 8.

10. System for saving the status of at least one software application which is running on a data processing system when an unexpected event forces a closing of running applications, wherein the system comprises one or more components adapted to perform the method of any claim 1 to 7.

## Patentansprüche

1. Verfahren in einen Datenverarbeitungssystem (150) zum Speichern des Betriebszustands von mindestens einer Softwareanwendung (305), die auf dem Datenverarbeitungssystem ausgeführt wird, wenn ein nicht erwartetes Ereignis das Schließen laufender Anwendungen veranlasst, wobei das Verfahren die folgenden Schritte beinhaltet:
- beim Starten des Systems wird als erster aus einer Vielzahl von Prozessen ein Prozess eines Softwaretools (301) ausgeführt, der die folgenden Schritte des Verfahrens ausführt;
- Führen einer Liste einer Vielzahl von Softwareanwendungen und für jede Anwendung Aufzeichnen einer Folge von vorgegebenen Aktionen, die zum Speichern des aktuellen Betriebszustandes ausgeführt werden müssen;
- Überwachen (405) der Aktivitäten des Datenverarbeitungssystems zum Erkennen eines Ereignisses, das eine bevorstehende Systemabschaltung anzeigt, wobei die Systemabschaltung einen Befehl beinhaltet, der das Schließen laufender Anwendungen veranlasst;
- Unterbrechen der Ausführung des Abschaltvorgangs als Reaktion auf das Erkennen des Ereignisses;
- Ausführen (411) der entsprechenden vorgegebenen Folge von Aktionen für jede laufende Anwendung aus der Vielzahl von Anwendungen;
- Speichern eines Hinweises, dass die mindestens eine laufende Softwareanwendung den aktuellen Betriebszustand zur späteren Wiederverwendung gespeichert hat;
- Wiederaufnehmen der Ausführung des Abschaltvorgangs.

2. Verfahren nach Anspruch 1, wobei der aktuelle Betriebszustand einer Softwareanwendung den Bearbeitungsstand der Softwareanwendung beinhaltet.

3. Verfahren nach einem der vorhergehenden Ansprüche, wobei der aktuelle Betriebszustand einer Softwareanwendung alle nicht gespeicherten Daten der Softwareanwendung beinhaltet.

4. Verfahren nach einem der vorhergehenden Ansprüche, wobei das Ereignis, welches ein bevorstehendes Ereignis anzeigt, eine durch das Betriebssystem ausgegebene Neustartanforderung beinhaltet.

5. Verfahren nach einem der Ansprüche 1 bis 4, wobei die Liste der Vielzahl von Anwendungen und die entsprechende Folge vorgegebener Aktionen durch das Softwaretool geführt wird.

6. Verfahren nach einem der Ansprüche 1 bis 5, das ferner die folgenden Schritte umfasst:
- Prüfen beim Starten des Systems, ob im System ein Hinweis gespeichert worden ist, dass eine oder mehrere Anwendungen vor einem vorhergegangenen Abschaltereignis ihren aktuellen Betriebszustand gespeichert haben; und
- Neustarten (417) der entsprechenden Anwendungen gemäß ihrem gespeicherten Betriebszustand als Reaktion auf einen gefundenen Betriebszustand.

7. Verfahren nach Anspruch 6, wobei der Schritt des Neustartens die Freigabe durch einen Benutzer erfordert.

8. Computerprogramm zum Ausführen der Schritte des Verfahrens nach einem der vorhergehenden Ansprüche, wenn das Computerprogramm auf einem Datenverarbeitungssystem ausgeführt wird.

9. Computerprogrammprodukt, das computerlesbare Mittel zum Umsetzen des Computerprogramms nach Anspruch 8 beinhaltet.

10. System zum Speichern des Betriebszustandes mindestens einer Softwareanwendung, die auf einem Datenverarbeitungssystem läuft, wenn ein nicht erwartetes Ereignis das Schließen laufender Anwendungen veranlasst, wobei das System eine oder mehrere Komponenten umfasst, die zum Ausführen des Verfahrens nach einem der Ansprüche 1 bis 7 geeignet sind.

## Revendications

1. Procédé d'enregistrement, dans un système de traitement de données (150), de l'état d'au moins une application logicielle (305) qui est en cours sur ledit système de traitement de données lorsqu'un événement inattendu force une fermeture des applications en cours, le procédé incluant les étapes consistant à :
- au démarrage du système, le premier d'une pluralité de processus qui sont exécutés est un processus d'un outil logiciel (301) mettant en oeuvre les étapes suivantes du procédé :
- maintenir une liste d'une pluralité d'applications logicielles et, pour chaque application, enregistrer un ensemble d'actions prédéterminées à effectuer pour enregistrer l'état courant ;
- surveiller (405) les activités du système de traitement de données pour détecter un évènement indiquant une action d'arrêt du système à venir, l'action d'arrêt du système incluant une commande qui force la fermeture des applications en cours ;
- en réponse à une détection dudit événement, suspendre l'exécution de ladite action d'arrêt ;
- réaliser (411), pour chaque application en cours de la pluralité d'applications, l'ensemble d'actions prédéterminées correspondant ;
- stocker une indication que la au moins une application logicielle en cours a enregistré l'état courant pour une réutilisation ultérieure ;
- restaurer l'exécution de ladite action d'arrêt.

2. Procédé selon la revendication 1, dans lequel l'état courant d'une application logicielle inclut l'état opérationnel de l'application logicielle.

3. Procédé selon l'une quelconque des revendications précédentes, dans lequel l'état courant d'une application logicielle inclut toute donnée non sauvegardée de l'application logicielle.

4. Procédé selon l'une quelconque des revendications précédentes, dans lequel l'événement indiquant un événement à venir inclut une demande de redémarrage émise par le système d'exploitation.

5. Procédé selon l'une quelconque des revendications 1 à 4, dans lequel la liste de la pluralité d'applications et l'ensemble d'actions prédéterminées correspondant sont maintenus par l'outil logiciel.

6. Procédé selon l'une quelconque des revendications 1 à 5, comprenant en outre les étapes consistant à :
- au démarrage du système, vérifier si une indication a été enregistrée dans le système qu'une ou plusieurs applications ont enregistré leur état courant avant un événement d'arrêt précédent ; et
- en réponse à tout état enregistré trouvé, redémarrer (417) l'application correspondante selon l'état enregistré.

7. Procédé selon la revendication 6, dans lequel l'étape de redémarrage est conditionnée à une approbation de l'utilisateur.

8. Programme d'ordinateur pour effectuer les étapes du procédé selon l'une quelconque des revendications précédentes, lorsque le programme d'ordinateur est exécuté sur un système de traitement de données.

9. Produit-programme d'ordinateur incluant des moyens lisibles par ordinateur intégrant le programme d'ordinateur selon la revendication 8.

10. Système d'enregistrement de l'état d'au moins une application logicielle qui est en cours sur un système de traitement de données lorsqu'un événement inattendu force une fermeture des applications en cours, dans lequel le système comprend un ou plusieurs composants adaptés pour réaliser le procédé selon l'une quelconque des revendications 1 à 7.
